Europäisches Patentamt

European Patent Office

Office européen des brevets

(19)

(11) EP 0 677 970 B1

(12) **FASCICULE DE BREVET EUROPEEN**

(45) Date de publication et mention
de la délivrance du brevet:
**15.09.1999 Bulletin 1999/37**

(51) Int Cl.⁶: **H04N 9/31**, G02F 1/1335

(21) Numéro de dépôt: **95400781.1**

(22) Date de dépôt: **07.04.1995**

(54) **Boîte à lumière pour valve optique**

Leuchtkasten für Lichtventil

Light box for light valve

(84) Etats contractants désignés:
**BE FR GB IT NL SE**

(30) Priorité: **12.04.1994 FR 9404301**

(43) Date de publication de la demande:
**18.10.1995 Bulletin 1995/42**

(73) Titulaire: **SEXTANT AVIONIQUE**
**92360 Meudon-la-Forêt (FR)**

(72) Inventeurs:
- **Barbier, Bruno**
  **F-92402 Courbevoie Cedex (FR)**
- **Lach, Patrick**
  **F-92402 Courbevoie Cedex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**EP-A- 0 030 875**       **EP-A- 0 367 332**
**EP-A- 0 372 525**       **EP-A- 0 540 140**
**WO-A-91/18315**

- **PATENT ABSTRACTS OF JAPAN vol. 11, no. 345 (P-636) 22 Novembre 1987 & JP-A-62 127 717 (TOSHIBA)**
- **PATENT ABSTRACTS OF JAPAN vol. 15, no. 367 (E-1112) 17 Septembre 1991 & JP-A-03 145 294 (NEC)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention se situe dans le domaine des dispositifs d'éclairage pour valves optiques. De tels dispositifs sont connus sous le nom de boîte à lumière. Les valves optiques sont des dispositifs réalisant un filtrage spatial et/ou temporel de la lumière. Les plus connues sont constituées par des réseaux matriciels de cristaux liquides commandés par des réseaux matriciels d'électrodes. Un état de la technique dans ce domaine est décrit dans un compte rendu d'une communication au 13ème colloque international sur la recherche dans les dispositifs de visualisation, pages 249-252, Septembre 93. Le compte rendu est intitulé "Un nouveau projecteur couleur à haute définition et forte luminosité à base d'un projecteur à valve de lumière unique. ("A novel projection single light valve hight brightness HD color projector").

L'auteur P.JANSSEN (Philips laboratories BRIAR CLIFF, USA) y décrit un nouveau projecteur à valve et y résume succinctement l'état connu de la technique dans ce domaine.

Ainsi indique-t-il page 249, colonne 2 qu'en ce qui concerne les projecteurs à valve unique, il en existe de deux types les spatiaux et les temporels. En ce qui concerne les spatiaux il est dit :

- "Filtre couleur mosaïque - L'image d'une visualisation en vue directe est projetée sur l'écran. Trois pixels colorés représentent un élément de résolution. A moins que les pixels ne soient superposés au moyen d'un système de "dépixellisation", il faut d'avantage de pixels pour une même impression de qualité, ce qui réduit le taux d'ouverture de chaque pixel et donc la transmission de lumière. Deux tiers ou d'avantage de la puissance lumineuse est perdue dans les filtres de couleur".

En ce qui concerne les valves séquentielles il est expliqué

"Une seule valve de lumière est alimentée séquentiellement avec de la lumière rouge, verte ou bleue, par exemple en faisant tourner une roue de filtres de couleur dans le chemin optique. Comme dans le cas de la mosaïque, la roue ne transmet en moyenne qu'un tiers de la puissance lumineuse".

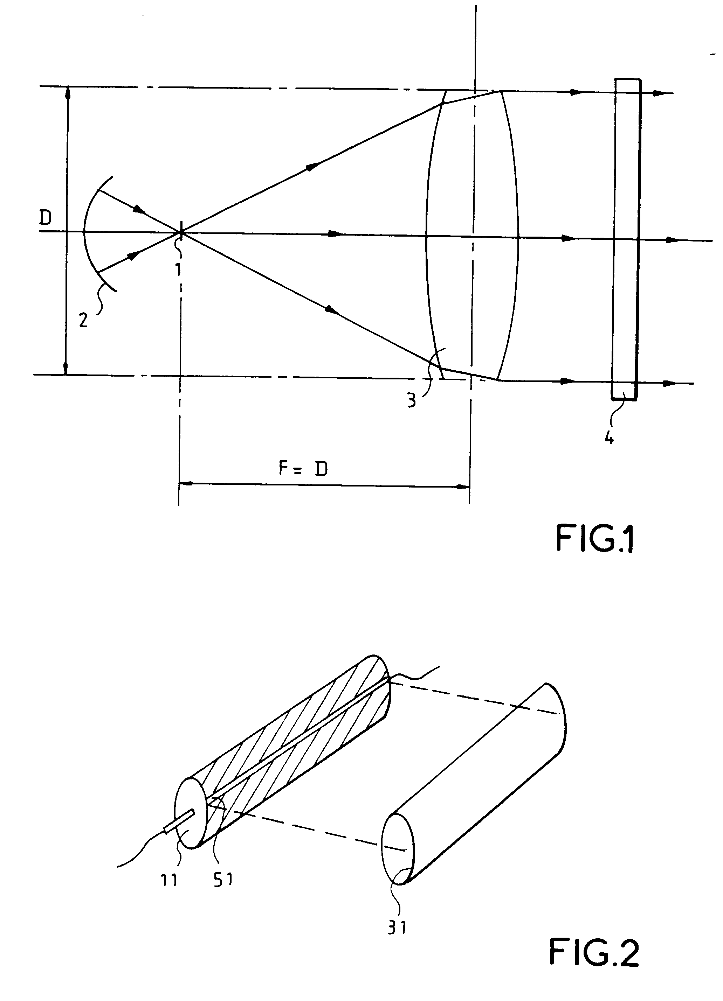

L'auteur explique que dans ces deux types de valve on ne dispose en sortie que d'un tiers de la puissance émise. Il décrit ensuite le principe d'un nouveau dispositif de projection à valve unique en liaison avec la figure 1 du compte rendu.

La lumière blanche d'une petite lampe à arc est partagée (de façon déjà connue dans l'art) au moyen de filtres dichroïques. A partir des différents faisceaux colorés créés, une optique transforme les faisceaux pour en faire des bandes rectangulaires rouge, verte et bleue au niveau de la valve, ces bandes étant séparées par des espaces sombres. Un prisme dans le chemin optique agit comme une lame vibrante à faces parallèles pour déplacer par rotation, les bandes de couleur au niveau de la valve. Chaque fois qu'une bande colorée atteint une limite de la valve, par exemple le bas, elle est redirigée vers le haut d'où elle continue son mouvement de descente vers le bas. Le processus de permutation des couleurs est illustré avec plus de détails figure 2. D'après la figure 2 et les explications données quant à l'électronique associée pour la commande de la valve, on comprend que la valve est divisée en trois parties rectangulaires horizontales, chaque partie ayant la forme d'un faisceau rectangulaire coloré.

Chacune des parties est éclairée alternativement grâce à la rotation du prisme par un faisceau rouge puis vert puis bleu. Lorsqu'une partie est éclairée par la lumière rouge par exemple, les pixels de ces parties sont commandés pour filtrer la lumière rouge et donner la partie rouge de l'image à projeter. De même pour le bleu et le vert. Ainsi pour une image renouvelée 60 fois par seconde, chacune des trois bandes de l'écran est renouvelée 180 fois par secondes, 60 fois avec une image rouge, 60 fois avec une image verte et 60 fois avec une image bleue. Des parties sombres entre les trois faisceaux lumineux colorés correspondent aux temps de changement d'état des cristaux de la valve entre deux commandes successives, soit 3 millisecondes environ.

Bien que le dispositif technique décrit dans ce document présente des avantages notamment en ce qui concerne la puissance lumineuse transmise par la valve il présente encore quelques inconvénients qui seront commentés ci-après.

La source lumineuse, et le système optique associé de mise en forme du faisceau lumineux constituent un ensemble assez volumineux qui notamment ne permet pas la réalisation de viseur tête-haute couleur de faible volume.

La source lumineuse étant unique sa fiabilité influe directement sur celle de la visualisation. Enfin qu'il s'agisse d'une lampe à arc, d'une source à incandescence ou d'une source de grande surface à base de tubes fluorescents, il y a, à chaque fois un inconvénient supplémentaire spécifique.

Chacun de ces points sera développé plus longuement ci-après.

Un dispositif d'éclairage avec source lumineuse de petite dimension comme celui décrit dans le document cité a une profondeur dans une direction perpendiculaire au plan de la valve qui est directement proportionnelle à la dimension de la diagonale de la valve comme expliqué ci-après en rapport avec la figure 1 annexée.

La structure type d'un système de mise en forme d'un faisceau lumineux est représentée figure 1. Une source lumineuse 1 de petite dimension comporte d'un côté un miroir sphérique 2 renvoyant la lumière émise par la source 1 vers un condenseur 3, situé de l'autre côté de la source, qui collimate le faisceau lumineux issu du réflecteur 2 et celui issus directement de la source 1 dans une direction perpendiculaire au plan d'une valve optique 4.

La valeur "D" du diamètre du condenseur 3 est environ égal à la longueur de la diagonale de la valve optique 4. Le condenseur 3 et le réflecteur 2 sont positionnés de part et d'autre de la source 1, le condenseur 3 est éloigné de la source 1, d'une distance égale à la distance focale "F" du condenseur ; la valeur minimale de F est égale environ au diamètre D, compte tenu de la limitation courante d'ouverture des optiques.

Ainsi, le volume minimum du système de mise en forme correspond-il à peu près à un cylindre de diamètre D et de longueur supérieure à D, en négligeant l'épaisseur du condenseur 3 et du réflecteur 2.

Les autres systèmes de mise en forme utilisant, par exemple, un réflecteur elliptique ou un réflecteur parabolique conduisent à une dimension longitudinale du même ordre de grandeur.

Dans le cas du document cité, la hauteur utile de la valve est réduite d'un tiers ce qui correspond à une diminution de la longueur de la diagonale mais il convient d'ajouter la profondeur du système tournant de déviation des faisceaux lumineux et du système d'anamorphose des faisceaux lumineux.

La source lumineuse 1 utilisée est, soit une lampe incandescente à filament, soit une lampe à arc comme dans le document cité. La lampe à incandescence a plusieurs inconvénients :

- l'efficacité lumineuse est faible ;
- la baisse du niveau lumineux par variation du courant dans la lampe s'accompagne d'une dérive chromatique vers le rouge et d'une baisse d'efficacité lumineuse.

La lampe à arc a d'autres inconvénients :

- la variation de luminance est difficilement réalisable électriquement ;
- l'évacuation correcte des calories interdit certaines positions de fonctionnement.

Ces deux technologies ont en commun d'autres inconvénients :

- la concentration de puissance lumineuse sur une faible surface rayonnante conduit à une forte concentration de chaleur qu'il est difficile d'évacuer ;
- le rayonnement fourni n'est pas monochromatique, il est blanc en général ;
- la fiabilité du système d'éclairage est très dépendante de la fiabilité de la lampe.

Pour le rétroéclairage des valves optiques en vision directe, les caractéristiques de rayonnement du faisceau de rétro-éclairage ne sont pas les mêmes. On utilise un autre type de source lumineuse : le tube fluorescent.

Ses inconvénients, pour les systèmes de projection sont :

- la luminance de la surface rayonnante est faible ;
- la surface rayonnante est importante ;
- le flux lumineux rayonné est faible.

Pour les valves en vision directe, on utilise ainsi, plusieurs tubes fluorescents, pour augmenter le flux lumineux. Le système de mise en forme est basé sur l'utilisation de diffuseurs fonctionnant en réflexion ou en transmission.

Le rendement lumineux d'un tel système est faible.

De plus, ce type de système n'est pas approprié pour la projection, car :

- le flux lumineux disponible est faible;
- la direction du rayonnement fourni est omnidirectionnelle.

Dans le cas où l'image à fournir par la visualisation est monochrome, verte par exemple, comme c'est le cas pour un viseur tête-haute, on pourrait interposer entre la source et la valve un filtre supprimant les radiations lumineuses indésirables qui réduit par conséquent le rendement lumineux.

Dans le cas où l'image à fournir est en couleur, elle est synthétisée, soit spatialement, soit temporellement à partir de trois images monochromes rouge, verte et bleue comme expliqué dans le préambule du document cité.

La synthèse spatiale peut s'effectuer, soit en utilisant trois valves optiques, soit en utilisant une seule valve optique.

Pour la synthèse spatiale à une seule valve, à chaque pixel est rajouté un filtre optique rouge, vert ou bleu qui réduit le rendement lumineux.

Pour la synthèse à trois valves, le rayonnement blanc est fractionné en trois rayonnements individuellement rouge, vert ou bleu de positions différentes et éclairant séparément chacune des valves ; les systèmes optiques de fractionnement sont encombrants. De tels systèmes sont décrits par exemple dans le brevet THOMSON-CSF n° 89.01533 du 7 février 1989.

Pour la synthèse temporelle, une seule valve optique est utilisée ; chaque pixel est rétro-éclairé successivement par un faisceau de couleur rouge, verte puis bleue. Le dispositif décrit dans le document cité est un exemple d'une telle réalisation.

Par rapport à l'état de la technique qui vient d'être décrit on peut résumer les buts de l'invention de la façon ci-après.

L'invention vise une boîte à lumière pour valve optique ayant :

- un niveau d'éclairement suffisant sur la valve optique ;

- une homogénéité spatiale d'éclairement suffisante ;
- une direction et une divergence de flux lumineux compatible de la valve et du système de projection ;
- une efficacité lumineuse maximale pour la couleur considérée,
- un volume minimal, en particulier une faible profondeur;
- un fonctionnement dans toutes les positions ;
- une gradation maximale du niveau lumineux;
- une sécurité de fonctionnement maximale.

Elle vise aussi à ce que la fiabilité ne soit pas liée à un élément fragile comme une lampe à arc ou un bulbe à filament incandescent. Elle vise pour les visualisations en couleur à la suppression du dispositif de partage du faisceau issu de la source en plusieurs faisceaux colorés. Elle vise une source lumineuse stable et ne nécessitant pas d'évacuation calorifique importante. Elle vise enfin un dispositif d'éclairage d'une valve ne comportant pas de pièces en mouvement.

Selon l'invention la source lumineuse de rétroéclairage de la valve optique est constituée de plusieurs tubes fluorescents à fente de couleurs identiques disposés parallèlement entre eux. Le système de mise en forme comporte une lentille longitudinale pour chacun des tubes lumineux. Chaque lentille est disposée parallèlement au tube qui lui est associé et répartit la lumière de ce tube sur une bande de la valve, cette bande étant parallèle au tube et à la lentille.

De façon plus générale l'invention est relative à une boîte à lumière pour valve optique ayant une surface générable par déplacement d'une droite parallèlement à une direction axiale de référence, la boîte comportant une source lumineuse émettrice d'un faisceau lumineux, et un condenseur orientant le faisceau lumineux par rapport à la surface de la valve, où la source lumineuse est constituée par au moins un réseau de n tubes fluorescents à fente dont chaque fente est parallèle à la direction axiale et en ce que le condenseur de chaque ensemble de tubes est constitué d'un nombre égal n de lentilles longitudinales parallèles à la direction axiale, chaque lentille ayant un plan de symétrie optique contenant la direction axiale et perpendiculaire à la surface de la valve, chaque lentille étant située entre la fente lumineuse et la surface de la valve.

En règle générale les valves optiques disponibles actuellement sur le marché sont des valves planes rectangulaires. La direction axiale de référence est alors parallèle à l'un des côtés du rectangle.

Lorsque la boîte à lumière constituée par le réseau de tubes et le réseau de lentilles associé, doit émettre une lumière faiblement divergente chaque fente de tube est disposée exactement face à la lentille qui lui est associée. On veut dire par là que le plan de symétrie longitudinal de la fente est aussi plan de symétrie optique longitudinal de la lentille qui lui est associée. Les plans de symétrie successifs des lentilles et des fentes sont dans ce cas équidistants.

Lorsque la boîte à lumière doit émettre une lumière divergente, les distances entre le plan de symétrie d'une fente et le plan de symétrie de la lentille qui lui est associée vont en croissant lorsque l'on se déplace en s'éloignant d'un plan de référence parallèle au plan de symétrie de l'ensemble des tubes et des lentilles contenant la direction axiale, le plan de référence pouvant être ledit plan de symétrie.

Enfin lorsque la boîte à lumière est utilisée avec une valve pour réaliser une image couleur à synthèse spatiale ou temporelle on utilise trois réseaux plans de tubes et lentilles associées. Ces réseaux sont disposés par exemple selon les faces d'un cube, un cube mélangeur assurant de façon connue la projection de chacune des couleurs de chaque ensemble sur la valve, ou de façon également connue la synthèse est assurée au moyen de miroirs simples ou dichroïques.

L'invention et quelques modes d'utilisation de l'invention seront maintenant décrits en regard des dessins annexés dans lesquels :

- la figure 1, déjà commentée illustre un système classique de rétroéclairage ;
- la figure 2, représente une vue en perspective d'un tube à fente et de sa lentille associée ;
- la figure 3, qui comprend les figures 3a, 3b et 3c illustre les variations d'émergence des rayons lumineux issus du condenseur en fonction des positions relatives de la fente d'un tube et de sa lentille associée ;
- la figure 4, représente une coupe longitudinale d'une boîte à lumière selon l'invention dans sa forme la plus générale ;
- les figures 5 et 6 représentent une boîte à lumière selon l'invention adaptée au rétroéclairage d'une valve pour projection, la figure 5 pour une image noire et blanche ou monochrome, la figure 6 pour une image couleur avec synthèse spatiale ;
- la figure 7, représente un viseur tête-haute de type connu ;
- la figure 8, représente une boîte à lumière selon l'invention adaptée au rétroéclairage d'une valve monochrome pour un viseur tête-haute dont la boite à oeil est dans la direction de l'axe optique de la valve ;
- la figure 9, représente une boite à lumière selon l'invention adaptée pour la visualisation en vision directe dont la boite à oeil n'est pas dans la direction de l'axe optique de la valve ;
- la figure 10, représente l'utilisation de boîtes à lumière selon l'invention pour la réalisation d'un projecteur à valve unique à synthèse temporelle ;
- la figure 11, représente spatialement la succession des allumages de tubes pour trois zones consécutives.

La figure 1 déjà commentée est destinée à expliquer que, avec les boîtes à lumière classiques la profondeur de la boîte est au moins égale à la diagonale de la valve associée.

La figure 2 représente une vue en perspective d'un tube à fente 11 et de sa lentille longitudinale 31 associée.

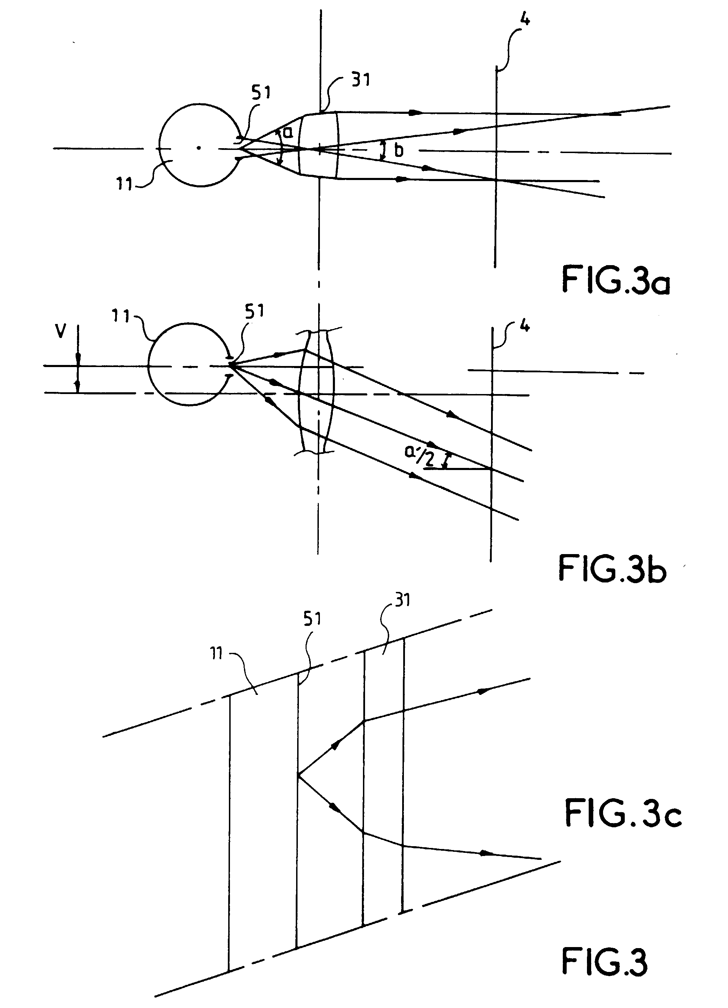

La suppression du luminophore suivant une fente 51, sur toute la longueur du tube et sur une très faible portion de sa circonférence permet de disposer sur cette fente d'un rayonnement lumineux important. Ce rayonnement est encore augmenté si le tube est équipé d'un réflecteur interne au tube disposé entre le verre du tube et la couche de luminophore. Ce rayonnement est approximativement lambertien (intensité lumineuse maximale dans la direction de la normale à la surface de la fente) et ne nécessite pas de dispositif de récupération du rayonnement arrière, extérieur au tube. La luminance au travers de la fente est beaucoup plus importante que sur le reste de la surface du tube ; elle est également notablement supérieure à la luminance d'un tube sans fente. Dans les réalisations qui seront décrites ci-après, le diamètre "d" de chaque tube est de 3,8 millimètres. Une ouverture "e" de 0,5 millimètre, la fente, est ménagée dans la couche de luminophore sur toute la longueur du tube. La luminance, au niveau de cette fente, supérieure à 100 kcd/m$^2$ est supérieure à la luminance du tube sans fente, elle est nettement supérieure (4 à 5 fois) sur la fente que sur le reste de la surface du tube. La couleur désirée est obtenue directement par choix du luminophore du tube fluorescent et permet d'éviter soit le surcroît de volume qu'occasionne le système de fractionnement en trois faisceaux colorés, soit la réduction du rendement énergétique qu'occasionne le ou les filtres absorbants colorés. La puissance lumineuse des tubes est modulable dans une grande dynamique et très rapidement, on peut donc réaliser un éclairage séquentiel trichrome à l'aide de trois réseaux de tubes, de couleurs différentes d'un réseau à l'autre, et combinés par voie optique. La multiplicité des sources augmente la fiabilité, car en cas de défaillance complète d'un tube, une partie du flux lumineux émis par les deux tubes voisins, après réflexions et diffusion sur les tubes et la cloison arrière, éclaire dans la direction adéquate la zone de la valve ordinairement éclairée par le tube défaillant. La répartition de l'énergie lumineuse sur plusieurs sources diminue la concentration calorique. La figure 3 est destinée à expliquer comment la position relative de la fente d'un tube et de la lentille qui lui est associée peut être utilisée pour moduler la divergence des faisceaux lumineux au niveau de la valve optique éclairée. La figure 3 comporte les figures 3a, 3b et 3c.

Les figures 3a et 3b sont des coupes transversales représentant un tube 11 ayant sa fente lumineuse 51 dirigée vers une lentille longitudinale de collimation 31. Sur les figures 3a et 3b, la fente 51 est dans le plan focal de la lentille 51.

Sur la figure 3a, les plans de symétrie longitudinal de la fente 51 et de la lentille 31 sont confondus. La trace de ce plan unique dans le plan de la figure est représentée par un trait d'axe passant par le centre du tube 11 et le centre de la fente 51. Il s'ensuit que l'image d'un point central de la fente 51 correspond à une direction de rayonnement en sortie de la lentille 31, parallèle au plan de symétrie et perpendiculaire à une valve 4. Compte tenu de la largeur de la fente l'angle de divergence b des rayons est de l'ordre de 6°.

Sur la figure 3b, les plans de symétrie longitudinal de la fente 51 et de la lentille 31 sont parallèles et décalés d'une distance v. Il s'ensuit que l'image d'un point central de la fente correspond à une direction de rayonnement faisant un angle d'incidence $\frac{\alpha'}{2}$ non nul sur la valve 4. On voit ainsi qu'un décalage entre les deux plans de symétrie peut être utilisé pour orienter le rayonnement dans une direction particulière.

La figure 3c est une coupe longitudinale d'un tube 11 et de la lentille 31 qui lui est associée par le plan de symétrie longitudinal de la fente 51. Dans ce plan perpendiculaire au plan de la valve 4 et au plan des figures 3a ou 3b, l'éclairage n'est pas collimaté. L'angle de divergence croît avec les dimensions longitudinales du tube.

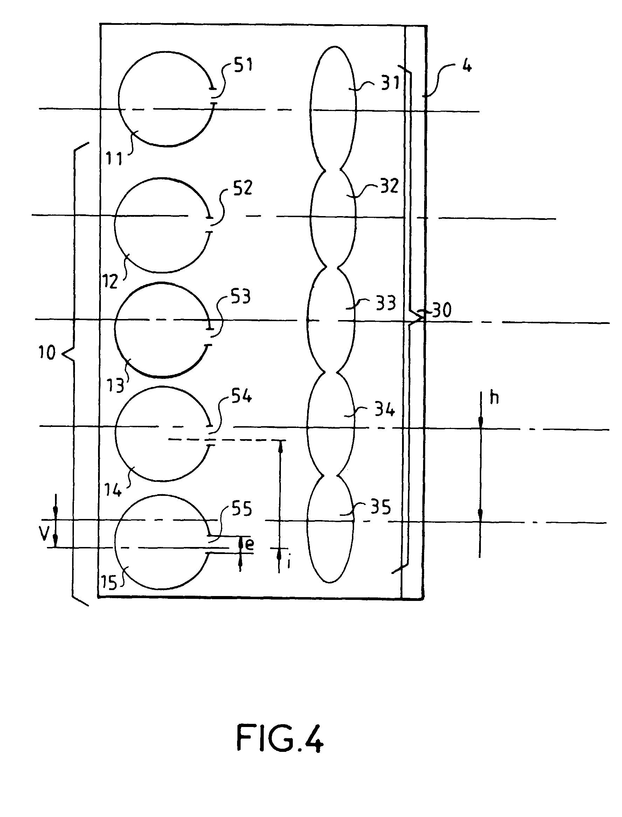

Des exemples de réalisation de boîte à lumière selon l'invention en fonction de l'utilisation des valves éclairées par ces boites seront donnés ci-après. Auparavant la forme générale de l'invention sera commentée en liaison avec la figure 4.

La figure 4 représente une coupe transversale d'un réseau 10 de tubes (11 à 15) et d'un réseau 30 de lentilles associées 31 à 35. Les réseaux 10 et 30 de tubes et de lentilles sont représentés devant une valve optique 4. Dans la représentation de la figure 4 la direction axiale de référence est perpendiculaire au plan de la figure. La direction horizontale de la figure 4 est perpendiculaire au plan de la valve 4. La direction verticale de la figure 4 est parallèle à l'un des côtés de la valve 4. Les sources rayonnantes sont constituées par les fentes 51 à 55 des tubes 11 à 15. Les traces des plans de symétrie des lentilles 31-35 sur le plan de la figure 4 sont représentées par des traits d'axes. L'espacement v entre le plan de symétrie d'une lentille et le plan de symétrie du tube du réseau 10 associé à cette lentille peut être variable d'un tube à l'autre et est fonction de la divergence que l'on souhaite obtenir au niveau de la valve 4. Les espacements v peuvent être obtenus par variation du pas h entre lentilles ou du pas i entre tubes ou par une combinaison des deux.

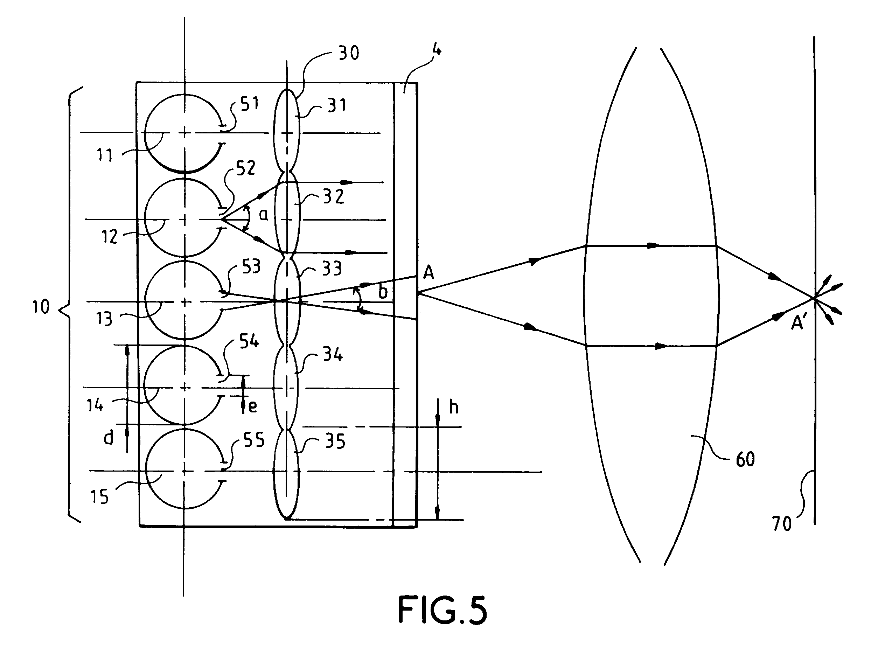

Un exemple de réalisation d'un système de rétroéclairage pour projecteur couleur est représenté figure 5. La boîte à lumière comprenant les réseaux de tube 10 et de lentille 30 a le même aspect que celui représenté figure 4, mais dans l'exemple de réalisation représenté figure 5, les écartements v sont nuls. Les plans de symétrie des fentes et des lentilles sont confondus. La divergence est faible.

Le projecteur est constitué d'une valve optique 4 d'un objectif 60 de projection et d'un écran diffusant 70.

L'objectif fournit une image agrandie V' de la valve V 4 sur l'écran 70 ; celui-ci est diffusant de façon à augmenter la divergence du faisceau formant chaque point de l'image V', comme le point A' de la figure 5 image du point A sur la valve. De la sorte, le rayonnement du point A', après traversée de l'écran, atteint l'oeil de l'observateur même s'il n'est pas face au centre de l'écran.

La valve verticale 4 est rétroéclairée par un réseau 10 de tubes fluorescents 11, 12, 13, 14, 15 disposés parallèlement à la direction axiale et superposés régulièrement suivant la verticale avec un pas "h" de 4 millimètres. Ils sont en nombre suffisant pour couvrir toute la hauteur de la valve. Un réseau de lentilles cylindriques, de même pas est interposé entre les tubes et la valve. La distance focale "f" de chaque lentille cylindrique de hauteur h égale au pas du réseau (4mm), compte tenu d'un nombre d'ouverture de 1, c'est à dire un angle d'ouverture "a" donné par:

$$a = 2.\text{Arctg}(h/2f), \text{ soit } a = 53 \text{ degrés.}$$

est la distance qui sépare la fente du tube et la lentille correspondante, si bien que le rayonnement issu de chaque lentille est collimaté dans le plan vertical. La divergence "b" du rayonnement après la traversée de la lentille est donnée par:

$$b = 2\text{Arctg}(e/2f), \text{ soit } b = 6 \text{ degrés.}$$

Cette configuration est bien adaptée aux valves optiques à cristal liquide qui nécessitent, pour assurer une qualité d'image suffisante, un rétroéclairage perpendiculaire au plan de la valve et faiblement divergent. Comme expliqué en liaison avec la figure 3c, dans le plan de symétrie longitudinal, l'éclairage n'est pas collimaté. Bien que chaque point de la valve 4 soit rétroéclairé par toute la longueur de la fente du tube correspondant seuls passeront à travers l'objectif 60 les rayons suffisamment proches de la normale à la valve pour pouvoir passer dans la pupille P de l'objectif de projection (objectif télécentrique dont la pupille d'entrée, image dans l'espace objet de la pupille réelle P est à l'infini et qui ne laisse donc passer que des rayons faiblement inclinés par rapport à l'axe optique).

La valve est de préférence neutre chromatiquement et elle est rétroéclairée par des tubes de même couleur, identique à la couleur de l'image à fournir. La valve peut également être polychrome (synthèse spatiale à une valve) et être rétroéclairée par des tubes blancs.

Dans le cas où le projecteur fournit une image polychrome et qu'il utilise trois valves optiques différentes recombinées (synthèse spatiale à trois valves), on dispose une boîte à lumière comme décrit ci-dessus, en liaison avec la figure 4 ou 5 derrière chacune des trois valves optiques. Les images de chacune de ces trois valves sont recombinées de façon connue, par exemple à l'aide d'un cube mélangeur, avant d'être projetées par l'objectif; chacune des trois boîtes contient des tubes de la même couleur (rouge, vert ou bleu).

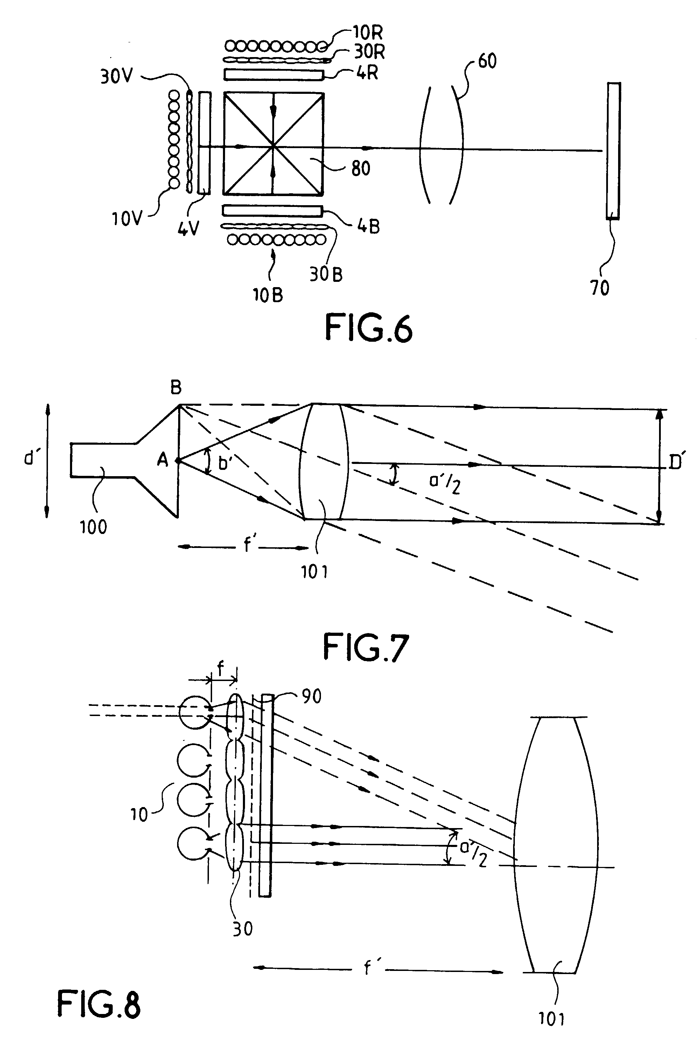

La figure 6 représente schématiquement un tel système. Comme sur les figures précédentes les éléments ayant même fonction portent le même numéro. Des indices R,V,B, ont été ajoutés pour caractériser les éléments participant à la génération des couleurs rouges, vertes et bleues.

Trois valves 4R, 4V, 4B sont disposées de façon connue sur trois faces d'un cube mélangeur 80. Conformément à l'invention la boîte à lumière comporte trois réseaux d'éclairage. Chacun de ces réseaux est situé derrière la valve qu'il éclaire. Il y a ainsi un réseau 30R de lentilles et 10R de tubes de couleur rouge pour l'éclairage de la valve rouge 4R et de même des ensembles 30V et 10V de tubes verts pour l'éclairage de la valve verte 4V et des ensembles 30B et 10B de tubes bleus pour l'éclairage de la valve bleu 4B.

L'utilisation d'une boîte à lumière selon l'invention pour la réalisation d'un viseur tête-haute sera maintenant expliquée en liaison avec les figures 7 et 8. Afin de montrer l'intérêt de l'invention les caractéristiques d'un viseur connu seront ci-après rappelées en liaison avec la figure 7.

Un viseur tête-haute est constitué d'une source d'image, classiquement un tube cathodique 100, et d'un objectif 101 de collimation qui forme à l'infini l'image de la source d'image; contrairement au projecteur, il n'y a pas de diffuseur entre l'objectif et l'observateur si bien que la région de l'espace (boîte à oeil), où l'image d'un point A du champ objet est visible par l'observateur, dépend pour un viseur à tube cathodique de la position du point A par rapport à la pupille d'entrée de l'objectif de collimation. Celle-ci est classiquement localisée sur l'objectif lui-même et son diamètre est approximativement égal à celui de l'objectif. Les valeurs numériques courantes sont les suivantes :

- diamètre de l'objectif D' = 130 mm
- longueur focale de l'objectif f' = 180 mm
- diamètre de la source d'image (tube cathodique) d' = 64 mm

Le champ total du viseur, angle " a' " sous lequel l'observateur voit l'image de la source est donné par :

$$a' = 2.\text{Arctg}(d'/2f'), \text{ soit } a' = 20 \text{ degrés}$$

L'angle d'ouverture " b' " de l'objectif (pour un point A au centre du champ) est :

$$b' = 2.Arctg(D'/2f'), \text{ soit } b' = 40 \text{ degrés}$$

Ces valeurs résultent d'un compromis entre la valeur du champ, la qualité de l'image et le diamètre de l'objectif.

Selon l'invention (figure 8), le viseur est réalisé avec le même objectif 101, le tube cathodique 100 est remplacé par une valve optique 4 rétroéclairée par un ensemble 10 de tubes fluorescents à fentes disposés selon la direction axiale de référence, et décalés entre eux d'un pas h' variable d'un tube à l'autre. Un réseau de lentilles cylindriques 30 est interposé entre les tubes et la valve 4. La technologie de valve optique utilisée assure une qualité d'image suffisante, même pour des rétroéclairages divergents. Les tubes fluorescents sont disposés de préférence de façon à ne pas limiter la taille de la boîte à oeil dans la dimension horizontale, puisque dans cette dimension l'éclairage n'est pas collimaté. Dans l'autre dimension, pour obtenir une boîte à oeil de dimension voulue, on peut interposer entre les lentilles du réseau 30 et la valve 4 un écran très faiblement diffusant 90 représenté par des pointillés 90 sur la figure 8. Conformément à ce qui a été expliqué en liaison avec la figure 3b, le décalage entre la position de la fente d'un tube et le centre de la lentille correspondante du réseau lenticulaire 30 est tel que le rayonnement est dirigé vers le centre de l'objectif de collimation. Ce décalage varie de zéro au centre à une valeur e' à l'extrémité du champ, donnée par :

$$e' = f.tg(a'/2)$$

f désignant la distance focale du réseau cylindrique (4,8 mm) et a' le champ du viseur (20°), on obtient e' = 0,84 mm. Dans le cas d'un viseur de casque (ou visualisation de tête) les valeurs numériques précédentes sont différentes. L'invention est néanmoins applicable.

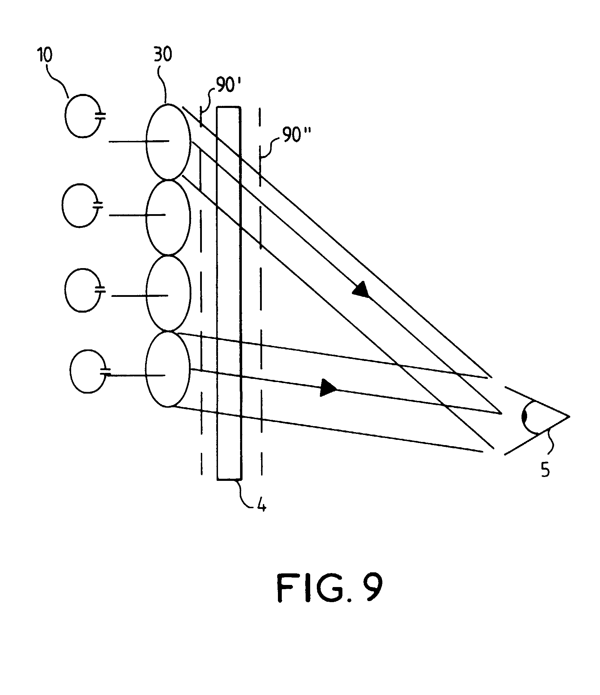

La figure 9 décrit une variante de la réalisation représentée figure 8.

Le mode de réalisation décrit ci-dessus en liaison avec la figure 8 permet une bonne vision de l'image de la valve pour un observateur dont la boîte à oeil est centrée dans le plan de symétrie de la valve.

Lorsque le centre de cette boîte à oeil se situe dans un plan qui n'est pas le plan de symétrie de la valve mais dans une direction faisant avec ce plan un angle $\alpha'/2$ tel que représenté figure 3b, on peut selon l'invention d'une part décaler tous les plans de symétrie des fentes, par rapport aux plan de symétrie des lentilles d'une même distance V. Cette distance V est représentée figure 3b. Ce premier décalage uniforme situe le centre de la boîte à oeil dans un plan passant par le centre de la valve, comportant la droite de symétrie de la valve parallèle à la direction axiale des tubes et faisant avec la normale à la valve l'angle $\alpha'/2$. On peut de plus si la boîte à oeil est proche de la valve, moduler la distance séparant chaque plan de symétrie d'une fente du plan de symétrie de la lentille qui lui correspond.

Ainsi si le centre de la boîte à oeil de l'observateur a par rapport à la valve, la position 5 représentée figure 9, la distance entre le plan de symétrie d'une fente et le plan de symétrie le plus proche d'une lentille ira en croissant à partir d'un plan de référence passant par le centre de la boîte à oeil et parallèle à la direction axiale des tubes.

On pourra ajouter pour agrandir la boîte à oeil un diffuseur 90'' plaqué à la valve du côté de l'observateur.

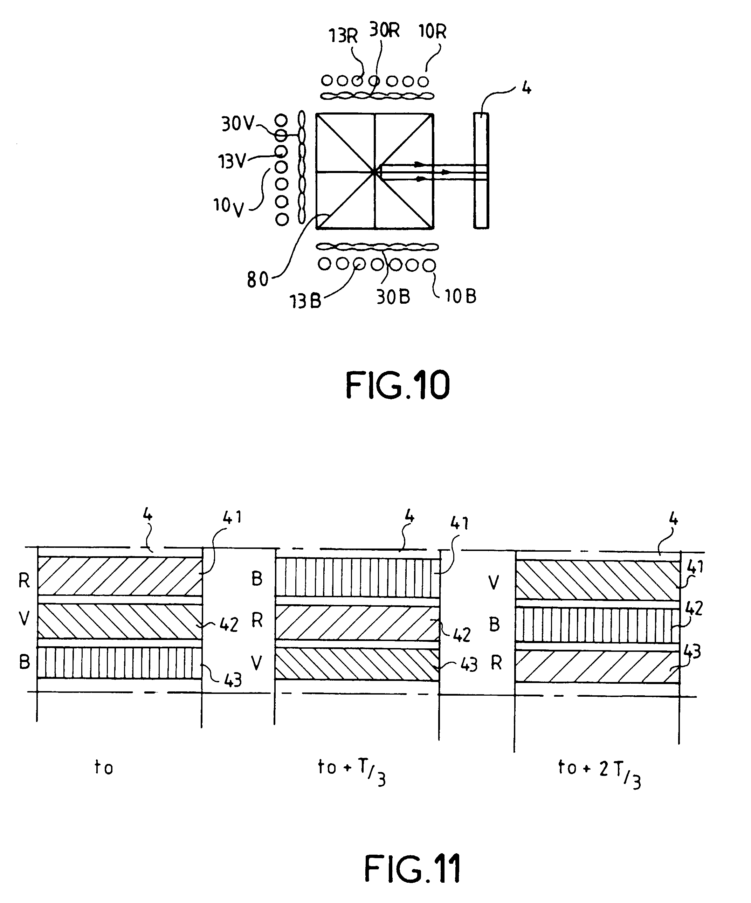

L'utilisation de réseaux 10 de tubes et 30 de lentilles pour le rétroéclairage trichrome séquentiel d'un projecteur à valve unique sera maintenant commentée en liaison avec les figures 10 et 11.

Un système de rétroéclairage à couleurs séquentielles éclairant une unique valve 4 optique est constitué de trois réseaux 10R, 10V, 10B ayant le même nombre n de tubes fluorescents à fente, associés chacun à un réseau de lentilles 30R, 30V, 30B. Chaque réseau est constitué de tubes de la même couleur, rouge, verte, bleue. Les trois faisceaux sont combinés pour former un faisceau unique à l'aide d'un cube mélangeur 80. Les tubes de chaque réseau sont alimentés de façon cyclique, pendant une fraction du cycle. Cette fraction du cycle a la même valeur pour tous les tubes, mais les allumages des différents tubes sont déphasés entre eux. L'essentiel est qu'une zone horizontale de la valve 4 éclairée par exemple par le tube 13R du réseau rouge 10R, le tube 13V homologue du réseau vert 10V et le tube 13B homologue du réseau bleu 10B respectivement, soit éclairée successivement par chacune de ces couleurs à une cadence triple de la fréquence de renouvellement de l'image totale. Ainsi si la fréquence de renouvellement d'image est 60Hz chaque zone de la valve 4 devra être éclairée 180 fois par secondes, trois éclairages successifs, un rouge, un vert, un bleu étant réalisés tous les 1/60 de seconde. Les allumages de tubes d'une même couleur sont déphasés les uns par rapport aux autres de façon à générer un faisceau coloré oscillant (verticalement par exemple) de section plus faible que la surface de la valve. Les tubes allumés simultanément sont décalés spatialement d'un réseau coloré à l'autre de façon à produire un déphasage temporel entre les trois faisceaux colorés oscillants.

La figure 11 représente temporellement et spatialement la succession des allumages pour 3 zones consécutives 41, 42, 43 d'une partie d'une valve 4. Au temps $t_o$ la zone 41 est éclairée par un ou plusieurs tubes rouges et les pixels de cette zone sont commandés pour représenter la partie rouge de l'image sur cette zone. La zone 42 est éclairée de même en vert et la zone 43 en bleu. Aux temps $t_o + T/3$ et $t_o + 2T/3$, T représentant la période d'une image on réalise une permutation circulaire des trois couleurs entre les trois zones.

## Revendications

1. Boîte à lumière pour valve optique (4) ayant une surface générable par déplacement d'une droite parallèlement à une direction axiale de référence, la boîte comportant une source lumineuse émettrice d'un faisceau lumineux, et un condenseur orientant le faisceau lumineux par rapport à la surface de la valve (4), la source lumineuse étant constituée par au moins un réseau (10) de n tubes fluorescents (11- 15) à fente (51 - 55) dont chaque fente (51 - 55) a un plan de symétrie optique contenant la direction axiale, le condenseur de chaque réseau (10) de tubes (11 - 15) étant constitué d'un même nombre n de lentilles (31 - 35) longitudinales parallèles à la direction axiale, chaque lentille ayant un plan de symétrie optique contenant la direction axiale et perpendiculaire à la surface de la valve (4), chaque lentille étant située entre la fente lumineuse (51 - 55) et la surface de la valve (4), et étant associée à un tube de manière à définir un couple lentille/tube, ladite boîte à lumière étant caractérisée en ce que l'espacement (v) entre le plan de symétrie d'une lentille et le plan de symétrie du tube associé à cette lentille varie d'un couple lentille/tube à l'autre et est fonction de la divergence de la lumière émise par la boîte à lumière.

2. Boîte à lumière selon la revendication 1, caractérisée en ce que l'espacement entre le plan de symétrie d'une lentille et le plan de symétrie du tube associé à cette lentille, est croissant lorsque l'on se déplace en s'éloignant d'un plan de référence parallèle au plan de symétrie de l'ensemble des tubes et des lentilles contenant la direction axiale.

3. Boîte à lumière selon la revendication 1, caractérisée en ce qu'elle comporte un écran diffusant entre le réseau de lentille et la valve.

4. Boîte à lumière selon l'une des revendications 1 à 3 caractérisée en ce qu'elle comporte trois réseaux (10R, 10V, 10B) de tubes associés à trois réseaux de lentilles (30R, 30V, 30B) chaque réseau de tubes comportant des tubes de la même couleur cette couleur étant différente de celle des deux autres réseaux, et des moyens (80) dirigeant la lumière en sortie de chacun des réseaux de lentilles (30R, 30V, 30B) vers une même valve (4).

5. Utilisation de trois valves (4R, 4V, 4B) éclairée chacune par une boîte à lumière selon l'une des revendications 1 à 3 pour la réalisation d'une synthèse spatiale à trois valves.

6. Utilisation d'une boîte à lumière selon l'une des revendications 1 à 3 pour la réalisation d'un projecteur d'image.

7. Utilisation d'une boîte à lumière selon l'une des revendications 1 à 3 pour la réalisation d'un viseur tête-haute.

8. Utilisation d'une boîte à lumière selon la revendication 1 pour la réalisation d'un viseur tête-haute.

## Claims

1. Light box for an optical valve (4) having a surface that can be generated by moving a straight line parallel to an axial reference direction, the box containing a light source which emits a light beam and a condenser which orients the light beam with respect to the surface of the valve (4), the light source consisting of at least one array (10) of n fluorescent tubes (11 - 15) with a slot (51 - 55), each slot (51-55) of which has an optical plane of symmetry containing the axial direction, the condenser of each array (10) of tubes (11 - 15) consisting of the same number n of longitudinal lenses (31 - 35) parallel to the axial direction, each lens having an optical plane of symmetry containing the axial direction and perpendicular to the surface of the valve (4), each lens lying between the light slot (51 - 55) and the surface of the valve (4) and being associated with a tube so as to define a lens/tube pair, the said light box being characterized in that the distance (v) between the plane of symmetry of a lens and the plane of symmetry of the tube associated with this lens varies from one lens/tube pair to another and depends on the divergence of the light emitted by the light box.

2. Light box according to Claim 1, characterized in that the distance between the plane of symmetry of one lens and the plane of symmetry of the tube associated with this lens increases on moving away from a reference plane parallel to the plane of symmetry of all of the tubes and lenses that contains the axial direction.

3. Light box according to Claim 1, characterized in that it includes a diffusing screen between the lens array and the valve.

4. Light box according to one of Claims 1 to 3, characterized in that it comprises three tube arrays (10R, 10G, 10B) associated with three lens arrays (30R, 30G, 30B), each tube array having tubes of the same colour, this colour being different from that of the other two arrays, and means (80) directing the light output by each of the lens arrays (30R, 30G, 30B) onto the same valve (4).

5. Use of three valves (4R, 4G, 4B), each illuminated by a light box according to one of Claims 1 to 3 for producing three-valve spatial synthesis.

**6.** Use of a light box according to one of Claims 1 to 3 for producing an image projector.

**7.** Use of a light box according to one of Claims 1 to 3 for producing a head-up sight.

**8.** Use of a light box according to Claim 1 for producing a head-up sight.


**Patentansprüche**

**1.** Leuchtkasten für optisches Ventil (4) mit einer Oberfläche, die durch Verschieben einer Geraden parallel zu einer axialen Bezugsrichtung erzeugt werden kann, wobei der Kasten eine Lichtquelle, die ein Lichtstrahlenbündel aussendet, sowie einen Kondensor enthält, der das Lichtstrahlenbündel in bezug auf die Oberfläche des Ventils (4) orientiert, wobei die Lichtquelle aus wenigstens einem Gitter (10) aus n Leuchtstoffröhren (11-15) mit Schlitz (51-55) gebildet ist, wobei jeder Schlitz (51-55) eine optische Symmetrieebene besitzt, die die axiale Richtung enthält, wobei der Kondensor jedes Gitters (10) von Röhren (11-15) aus derselben Anzahl n von longitudinalen Linsen (31-35), die zur axialen Richtung parallel sind, gebildet ist, wobei jede Linse eine optische Symmetrieebene besitzt, die die axiale Richtung enthält und zur Oberfläche des Ventils (4) senkrecht ist, wobei sich jede Linse zwischen dem Lichtschlitz (51-55) und der Oberfläche des Ventils (4) befindet und einer Röhre in der Weise zugeordnet ist, daß ein Linsen/Röhren-Paar definiert wird, wobei der Leuchtkasten dadurch gekennzeichnet ist, daß der Abstand (v) zwischen der Symmetrieebene einer Linse und der Symmetrieebene der dieser Linse zugeordneten Röhre von einem Linsen/Röhren-Paar zum nächsten variiert und von der Divergenz des vom Leuchtkasten ausgesendeten Lichts abhängt.

**2.** Leuchtkasten nach Anspruch 1, dadurch gekennzeichnet, daß der Zwischenraum zwischen der Symmetrieebene einer Linse und der Symmetrieebene der dieser Linse zugeordneten Röhre mit zunehmendem Abstand von einer Referenzebene, die zu der die axiale Richtung enthaltenden Symmetrieebene der Gesamtheit von Röhren und Linsen parallel ist, zunimmt.

**3.** Leuchtkasten nach Anspruch 1, dadurch gekennzeichnet, daß er zwischen dem Linsengitter und dem Ventil einen Diffusionsschirm enthält.

**4.** Leuchtkasten nach einem der Ansprüche 1 bis 3, dadurch gekennzeichnet, daß er versehen ist mit drei Röhrengittern (10R, 10V, 10B), die drei Linsengittern (30R, 30V, 30B) zugeordnet sind, wobei jedes Röhrengitter Röhren derselben Farbe enthält, die von derjenigen der beiden anderen Gitter verschieden ist, sowie mit Mitteln (80), die das Licht am Ausgang jedes der Linsengitter (30R, 30V, 30B) zu demselben Ventil (4) richten.

**5.** Verwendung von drei Ventilen (4R, 4V, 4B), die jeweils durch einen Leuchtkasten nach einem der Ansprüche 1 bis 3 beleuchtet werden, um eine räumliche Synthese aus drei Ventilen zu verwirklichen.

**6.** Verwendung eines Leuchtkastens nach einem der Ansprüche 1 bis 3 für die Verwirklichung eines Bildprojektors.

**7.** Verwendung eines Leuchtkastens nach einem der Ansprüche 1 bis 3 für die Verwirklichung einer Überkopf-Visiereinrichtung.

**8.** Verwendung eines Leuchtkastens nach Anspruch 1 für die Verwirklichung einer Überkopf-Visiereinrichtung.

FIG.1

FIG.2

FIG.3a

FIG.3b

FIG.3c

FIG.3

FIG.4

FIG.5

FIG.6

FIG.7

FIG.8

FIG. 9

FIG.10

FIG.11